# FASCICULE DE BREVET EUROPEEN

(11) **EP 1 593 596 B1**
(45) Date de publication et mention de la délivrance du brevet: **09.07.2008**
(21) Numéro de dépôt: 05103717.4
(22) Date de dépôt: 04.05.2005
(51) Int. Cl.: B64D 27/26, B64D 27/20, F02C 7/20

(54) **Moteur d'avion avec des moyens de suspension à la structure d'un avion**
Flugzeugtriebwerk mit Mittel zur Aufhängung an der Flugzeugstruktur
Aircraft engine with means for mounting it on the aircraft structure

(30) Priorité: 04.05.2004 FR 0404781
(43) Date de publication de la demande: 09.11.2005
(73) Titulaire: SNECMA, 75015 Paris (FR)
(72) Inventeur: Dron, Sébastien, 92120, Montrouge (FR)
(74) Mandataire: David, Daniel

(56) Documents cités:
- EP-A- 0 997 653
- FR-A- 2 799 432
- US-A- 4 326 682
- US-A- 5 921 500
- US-A- 5 927 644

## Description

L'invention concerne la suspension des moteurs d'avion, plus particulièrement des turboréacteurs.

Sur le trajet de l'air qui le traverse, d'amont en aval, un moteur comporte une manche d'entrée, un carter de rétention des aubes de la soufflante, un carter intermédiaire, un carter d'échappement et une tuyère ou cône d'échappement.

Dans le cas d'un montage sur le fuselage, un moteur est généralement accroché à l'avion par une suspension avant et une suspension arrière. La suspension avant est fixée sur le carter intermédiaire du moteur, la suspension arrière, sur un anneau de suspension relié au carter d'échappement par une série de biellettes.

Le moteur comprend un canal de flux froid ou « outer fan duct » qui assure également la fonction de reprise de poussée inverse (reverse) entre l'inverseur et le carter intermédiaire. Ce carter externe est alors structural. L'invention concerne notamment les moteurs à outer fan duct, d'une part, et les suspensions avant et arrière de ces moteurs, d'autre part. Elle concerne aussi la sécurité de rupture (fail safe) de cette suspension avant et plus particulièrement de ses moyens de reprise de poussée.

Par la suspension avant, le moteur est relié à une poutre, elle-même fixée à un élément de l'armature de l'avion, généralement un pylône. Le carter intermédiaire est par exemple fixé à la poutre de la suspension avant en trois endroits, respectivement aux deux extrémités, haute et basse, de la poutre et en partie médiane, par l'intermédiaire de trois éléments de reprise des efforts. Les éléments d'extrémité de la poutre sont des biellettes, celui de la partie médiane, un groin, ou une broche, central appelé « spigot ».

La suspension avant d'un moteur accroché latéralement à l'arrière du fuselage assure la reprise d'efforts suivant quatre degrés : trois degrés de translation - l'axe vertical Z, latéral Y et suivant l'axe X de poussée - et un degré de rotation autour de l'axe X de poussée.

Ces éléments de reprise d'efforts comprennent des biellettes qui sont fixées par leurs extrémités au carter du moteur et à la poutre par des chapes et qui assurent la reprise d'efforts dans leur seule direction longitudinale.

Tout comme pour la suspension avant, les biellettes de la suspension arrière sont fixées par leurs extrémités à l'anneau et à la poutre de suspension par des chapes qui assurent la reprise d'efforts dans leur direction longitudinale. La suspension arrière d'un moteur accroché latéralement au fuselage assure la reprise d'efforts suivant l'axe vertical Z et l'axe latéral Y.

En fonctionnement normal les efforts de poussée directe sont repris par la suspension avant, et les efforts de poussée inverse transitent d'abord, de l'arrière vers l'avant, par l'outer fan duct puis par le carter intermédiaire et la suspension avant, pour finalement atteindre le pylône de l'avion.

En cas de rupture d'un des éléments de la suspension avant, il est souhaitable que le système de sécurité de rupture (fail safe) continue de reprendre les efforts de poussée ; il est également souhaitable qu'en cas de rupture d'un élément sur la suspension arrière le système de sécurité continue de reprendre les efforts suivant le degré associé à l'élément rompu.

US4326682 montre une suspension à une structure d'avion d'un moteur à canal de flux froid structural avec un carter intermédiaire, un carter externe, un anneau de suspension, une suspension avant et une suspension arrière.

L'invention concerne une suspension à une structure d'avion d'un moteur à canal de flux froid structural avec un carter intermédiaire, un carter externe et un anneau de suspension, l'anneau de suspension étant relié au carter intermédiaire par le carter externe, ladite suspension comprenant une suspension avant, fixée sur le carter intermédiaire et comportant des moyens de reprise de poussée et une suspension arrière fixée sur l'anneau de suspension, caractérisée par le fait que la suspension arrière est agencée pour, par l'intermédiaire du carter externe, reprendre les efforts de poussée en cas de rupture des moyens de reprise de poussée de la suspension avant.

C'est ainsi que la demanderesse propose son invention pour la reprise des efforts de poussée sur la suspension avant en cas de rupture des moyens de reprise de poussée de cette suspension avant.

L'invention est remarquable par le fait qu'on a osé faire transiter des efforts par l'outer fan duct, non plus seulement de l'arrière vers l'avant pour le transit des efforts de reverse de l'inverseur de poussée, mais également de la suspension avant vers la suspension arrière, c'est-à-dire de l'avant vers l'arrière.

De préférence, la suspension arrière du moteur de l'invention comporte une poutre de fixation, au fuselage, de l'anneau de suspension, comprenant un ensemble d'une chape de sécurité à deux oreilles, s'étendant sensiblement dans un plan axial du moteur, et d'un axe de sécurité destiné à s'étendre verticalement, traversant avec jeu la languette centrale, solidaires, l'un, de la poutre de suspension, l'autre, de l'anneau de suspension.

Il est préférable que la chape et l'axe soient solidaires de l'anneau de suspension, une languette intercalaire solidaire de la poutre s'étendant entre les deux oreilles de la chape de l'anneau de suspension.

En fonctionnement de sécurité de rupture, dans le cas d'une rupture des moyens de reprise de poussée de la suspension avant, le jeu est consommé et, la reprise de poussée s'effectuant par la suspension arrière, les efforts de poussée transitent par le carter intermédiaire, l'outer fan duct, l'anneau de suspension, les oreilles de la chape de sécurité, l'axe et la poutre de la suspension arrière, avant d'atteindre le pylône.

Les avantages de l'invention sont nombreux : la simplicité de fabrication, le faible poids, la facilité d'inspection du chemin d'efforts primaire et la faculté d'assurer une fonction de sécurité en cas de rupture d'un des éléments classiques de reprise d'efforts (les biellettes) de la suspension arrière, ce qui entraîne à nouveau un gain de masse et d'encombrement.

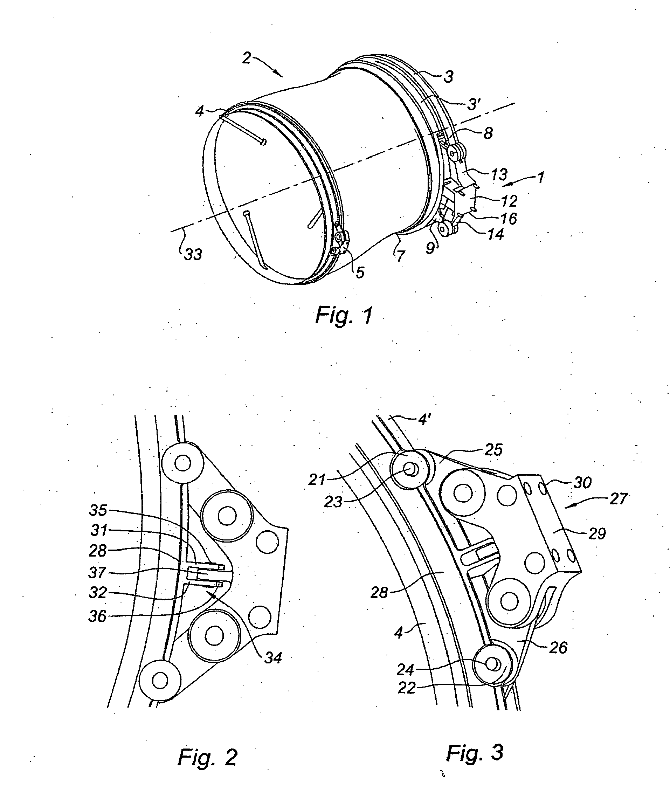

L'invention sera mieux comprise à l'aide de la description suivante des formes de réalisation préférées du moteur et de sa suspension arrière, en référence au dessin annexé, sur lequel
- la figure 1 est une vue en perspective des suspensions et des éléments du moteur, à suspendre au fuselage de l'avion, nécessaires aux suspensions ;
- la figure 2 est une vue de face de la poutre de suspension arrière et
- la figure 3 est une vue en perspective de la poutre de suspension arrière et de l'anneau de suspension du moteur suspendu à la poutre.

Les suspensions avant 1 et arrière 5 qui vont maintenant être décrites visent à fixer, à un fuselage d'avion, il s'agira le plus souvent de l'arrière du fuselage, un turboréacteur 2 comprenant notamment un carter intermédiaire 3, sur lequel est fixée la suspension avant 1, un anneau de suspension 4, sur lequel est fixée la suspension arrière 5 et qui est relié à un carter d'échappement, non représenté, par une série de biellettes 6. L'anneau de suspension 4 est également relié au carter intermédiaire 3 par un carter externe structural 7 de reprise de poussée (directe ou inverse) appelé « outer fan duct ».

Sur une ferrure en arceau 3' solidaire du carter intermédiaire sont rapportées, pour la fixation avant du réacteur, une chape femelle haute 8 et une chape femelle basse 9 ; entre les deux chapes, dans une zone qui peut être qualifiée de médiane, le carter intermédiaire présente en saillie radiale une plate-forme de réception d'un élément de reprise d'efforts et de sécurité de rupture de la suspension avant 1.

La suspension avant 1 comporte une poutre 12, en forme générale de trapèze allongé et légèrement curviligne, présentant deux bras 13, 14 s'étendant de part et d'autre d'une portion médiale, ou centrale, se terminant, au niveau de la petite base du trapèze, par une platine 16 en saillie latérale, de fixation à un pylône (non représenté) de la structure du fuselage de l'avion.

La fixation de la poutre de suspension 12 au pylône s'effectue à l'aide de la platine 16 par l'intermédiaire de pions de cisaillement et de vis s'étendant aux quatre coins de la platine orthogonalement à elle.

Les deux extrémités libres des bras 13, 14 de la poutre de suspension sont reliées aux deux chapes 8, 9 de la ferrure 3' du carter intermédiaire 3 par deux biellettes de reprise d'efforts montées tourillonnantes dans leurs chapes ainsi qu'aux extrémités des bras de la poutre agencées aussi en forme de chape.

L'élément médian de reprise d'efforts et de sécurité de rupture de la suspension avant reçoit, dans sa plate-forme, par l'intermédiaire d'une rotule, un groin, ou tourillon, ou broche, ou spigot, non représenté, de reprise d'efforts de la poutre de suspension 1.

En ce qui concerne la suspension arrière 5, elle ressemble globalement à la suspension avant 1.

Sur une ferrure en arceau 4', solidaire de l'anneau de suspension 4, sont ménagés deux berceaux haut 21 et bas 22 de réception de biellettes 23, 24 de reprise d'efforts, montées tourillonnantes, par une première extrémité, dans ces berceaux et, par une deuxième extrémité, dans des extrémités des deux bras 25, 26 de la poutre de suspension arrière 27 agencées en forme de chape.

La poutre de suspension arrière 27 a une forme générale trapézoïdale, présentant les deux bras 25, 26 qui s'étendent de part et d'autre d'une portion centrale 28 se terminant, au niveau de la petite base du trapèze, par une platine 29 de fixation au pylône de la structure du fuselage de l'avion.

Vont maintenant être décrits les organes de la suspension arrière 5 de sécurité de rupture de reprise de poussée de la suspension avant 1.

Deux plaques radiales 31, 32 s'étendent latéralement en saillie hors de la ferrure 4', sensiblement dans des plans axiaux du moteur, c'est-à-dire des plans contenant l'axe de poussée 33, et forment les deux oreilles d'une chape de sécurité 34. Dans leur portion libre externe, les oreilles de sécurité comportent un alésage traversant 36 de réception d'un axe 35 destiné à s'étendre verticalement.

Une languette 37 est suspendue à la portion centrale de la poutre 27, du côté opposé à celui de la platine 29. L'axe 35 est chassé à travers les oreilles 31 et 32. La languette est montée entre les deux oreilles 31, 32 de la chape 34, l'axe 35 s'étendant à travers l'alésage de la languette 37 avec un jeu de sécurité.

On aurait pu naturellement inverser l'une ou l'autre des dispositions présentées ci-dessus. Ainsi les biellettes de reprise d'efforts pourraient avoir des extrémités en forme de chape. La chape de sécurité de rupture 34, au lieu d'être solidaire de la ferrure de l'anneau de suspension, pourrait être solidaire de la poutre, la languette 37 devenant alors solidaire de la ferrure de l'anneau de suspension.

En fonctionnement de sécurité de rupture, dans le cas d'une rupture des organes de reprise de poussée de la suspension avant 1, le jeu, entre l'axe 35 et l'alésage de la languette 37, est d'abord consommé, puis la reprise de poussée s'effectue par la suspension arrière 5, les efforts de poussée transitant par le carter intermédiaire 3, l'outer fan duct 7, l'anneau de suspension 4 et sa ferrure 4', l'axe 35 et la poutre 27 de la suspension arrière, avant d'atteindre le pylône.

## Revendications

1. Suspension à une structure d'avion d'un moteur à canal de flux froid structural avec un carter intermédiaire (3), un carter externe (7) et un anneau de suspension (4), l'anneau de suspension (4) étant relié au carter intermédiaire (3) par le carter externe (7), ladite suspension comprenant une suspension avant (1), fixée sur le carter intermédiaire (3) et comportant des moyens de reprise de poussée et une suspension arrière (5) fixée sur l'anneau de suspension, la suspension arrière (5) étant agencée pour, par l'intermédiaire du carter externe (7), reprendre les efforts de poussée en cas de rupture des moyens de reprise de poussée de la suspension avant (1).

2. Suspension selon la revendication 1 dont la suspension arrière (5), comportant une poutre (27) de fixation à la structure de l'avion, comprend un ensemble d'un chape de sécurité (34) à deux oreilles (31, 32) et d'une languette ou autre moyen équivalent, disposée entre les deux oreilles, l'une de la chape et de la languette étant solidaire l'une de la poutre de suspension (27), l'autre, de l'anneau de suspension (4), toutes deux étant traversées par un axe (35) de sécurité en attente perpendiculaire à l'axe du moteur.

3. Suspension selon la revendication 2 dans lequel la chape (34) et l'axe en attente (35) sont solidaires de l'anneau de suspension (4) et une languette intercalaire (37) solidaire de la poutre (27).

4. Suspension selon l'une des revendications 2 et 3 dans lequel en cas de rupture des moyens de reprise de poussée de la suspension avant (1), le jeu est consommé et la reprise de poussée s'effectue par la suspension arrière (5), les efforts de poussée transitant par le carter intermédiaire (3), l'outer fan duct (7), l'anneau de suspension (4), les oreilles (31, 32) de la chape de sécurité (34), l'axe (35) et la poutre de suspension arrière (5).

5. Moteur d'avion à canal de flux froid structural avec un carter intermédiaire (3), un carter externe (7) et un anneau de suspension (4), l'anneau de suspension (4) étant relié au carter intermédiaire (3) par le carter externe (7), comprenant une suspension à une structure d'avion selon l'une des revendications 1 à 4.

## Claims

1. Suspension onto an aircraft structure of an engine with structural outer fan duct and intermediate housing (3), external housing (7) and a suspension ring (4), the suspension ring (4) being connected to the intermediate housing (3) by the external housing (7), the said suspension comprising a forward suspension (1), mounted onto the intermediate housing (3) and comprising thrust transmitting means and a rear suspension (5) mounted onto the suspension ring, the rear suspension (5) being designed to take up, via the external housing (7), the thrust forces in the case of rupture of the thrust transmitting means of the forward suspension (1).

2. Suspension according to Claim 1 in which the rear suspension (5), comprising a beam (27) for mounting onto the aircraft structure, comprises an assembly of a safety clevis (34) with two lugs (31, 32) and an anchor tab or other equivalent means, disposed in between the two lugs, one of the clevis or the anchor tab being rigidly fixed to the suspension beam (27), the other to the suspension ring (4), both being threaded by a safety standby pin (35) sitting perpendicular to the axis of the engine.

3. Suspension according to Claim 2 in which the clevis (34) and the standby pin (35) are rigidly fixed to the suspension ring (4) and a sandwiched anchor tab (37) is rigidly fixed to the beam (27).

4. Suspension according to either of Claims 2 and 3 in which in the case of rupture of the thrust transmitting means of the forward suspension (1), the play is absorbed and the thrust transmission is effected by the rear suspension (5), the thrust forces being transmitted via the intermediate housing (3), the outer fan duct (7), the suspension ring (4), the lugs (31, 32) of the safety clevis (34), the pin (35) and the rear suspension beam (5).

5. Aircraft engine with structural outer fan duct and an intermediate housing (3), an external housing (7) and a suspension ring (4), the suspension ring (4) being connected to the intermediate housing (3) by the external housing (7), comprising a suspension onto an aircraft structure according to one of Claims 1 to 4.

## Patentansprüche

1. Aufhängung eines Motors mit konstruktivem äußeren Fan-Kanal an einer Flugzeugkonstruktion, mit einem Zwischengehäuse (3), einem Außengehäuse (7) und einem Aufhängungsring (4), wobei der Aufhängungsring (4) mit dem Zwischengehäuse (3) durch das Außengehäuse (7) verbunden ist, wobei die Aufhängung eine vordere Aufhängung (1) aufweist, die an dem Zwischengehäuse (3) befestigt ist und Mittel zur Wiederaufnahme des Schubs aufweist, und eine hintere Aufhängung (5) aufweist, die an dem Aufhängungsring befestigt ist, wobei die hintere Aufhängung (5) angeordnet ist, um über das Außengehäuse (7) die Schubkräfte im Falle eines Bruchs der Mittel zur Wiederaufnahme des Schubs der vorderen Aufhängung (1) wieder aufzunehmen.

2. Aufhängung nach Anspruch 1, deren hintere Aufhängung (5), die einen Träger (27) zur Befestigung an der Konstruktion des Flugzeugs aufweist, eine Gruppe aus einem Sicherheitsgabelgelenk (34) mit zwei Ösen (31, 32) und einer Zunge oder einem anderen äquivalenten Mittel aufweist, die zwischen den zwei Ösen angeordnet ist, wobei das Gabelgelenk oder die Zunge mit dem Aufhängungsträger (27), das/die andere mit dem Aufhängungsring (4) fest verbunden sind, wobei beide von einer Reserve-Sicherheitsachse (35) durchsetzt sind, die senkrecht zu der Achse des Motors liegt.

3. Aufhängung nach Anspruch 2, bei welcher das Gabelgelenk (34) und die Reserve-Achse (35) mit dem Aufhängungsträger (4) und einer eingeschobenen Zunge (37) fest verbunden sind, die mit dem Träger (27) fest verbunden ist.

4. Aufhängung nach einem der Ansprüche 2 und 3, bei welcher im Falle eines Bruchs der Mittel zur Wiederaufnahme des Schubs der vorderen Aufhängung (1) das Spiel verbraucht wird und die Wiederaufnahme des Schubs durch die hintere Aufhängung durchgeführt wird, wobei die Schubkräfte über das Zwischengehäuse (3), den äußeren Fan-Kanal (7), den Aufhängungsring (4), die Ösen (31, 32) des Sicherheitsgabelgelenks (34), die Achse (35) und den hinteren Aufhängungsträger (5) gehen.

5. Flugzeugmotor mit konstruktivem äußeren Fan-Kanal mit einem Zwischengehäuse (3), einem Außengehäuse (7) und einem Aufhängungsring (4), wobei der Aufhängungsring (4) mit dem Zwischengehäuse (3) durch das Außengehäuse (7) verbunden ist, der eine Aufhängung an einer Flugzeugkonstruktion nach einem der Ansprüche 1 bis 4 aufweist.
